# EUROPEAN PATENT APPLICATION

(11) **EP 2 475 054 A1**
(43) Date of publication of application: **11.07.2012**
(21) Application number: 11150190.4
(22) Date of filing: 05.01.2011
(51) Int. Cl.: H01S 3/06, H01S 3/07, H01S 3/094

(54) **Collinearly pumped multiple thin disk active medium and its pumping scheme**

(71) Applicant: UAB "Ekspla", 02300 Vilnius (LT)
(72) Inventor: Grisinas, Michailas, LT-06135 Vilnius (LT); Michailovas, Andrejus, LT-06325 Vilnius (LT)
(74) Representative: Draugeliene, Virgina Adolfina

(57) **Abstract**

The invention relates to the laser field, namely structures or forms of the active media of optical resonators that are based on solid state gain materials of thin disk geometry, and can be used to generate or amplify laser radiation. The longitudinally pumped multiple disk active element (1) comprises at least two arranged against each other in parallel active laser medium plates (2), on the outer surface having high reflectivity layer (6) and thermally coupled with the means for cooling. The pumping beam (3) propagates through the inner cavity between the said plates in a zigzag shaped path along the active element, it forms the excited disks on the plates thus inducing generation of the laser radiation and in the inside area forms the single zigzag shaped generated laser beam, which is collinear and is aligned in space with the pumping beam (3). In order to simplify the structure of the multiple disk active element, and to amplify the power of the outgoing radiation, the pumping beam passes through the area of the active element in a zigzag shaped path at least twice, while the thickness of the formed each excited disk (h) is significantly smaller than its diameter (d), and the thickness of the said disk is selected by satisfying the condition that during at least two passes of the pumping beam the total absorption coefficient in the active element should be about 90%.

## Description

The invention relates to the laser field, namely structures or forms of the active media of optical resonators, that are based on a solid state gain materials of thin disk geometry, and that can be used to generate or amplify laser radiation.

The solid state gain materials of thin disk geometry are well known in laser oscillators and amplifiers. In comparison with conventional rod-shaped active elements of the end-pumped and side-pumped configurations, the main advantages of a thin disk geometry are better thermal management, low distortions of the laser radiation caused by heat, while low level distortions in the laser radiation caused by heat, enables to design powerful lasers, operating in a single transverse mode regime (fundamental TEM00 mode), which ensures high quality of radiation. Solid state thin disk active elements enable easily increase the power of the pumping beam. At the same time, it is possible to increase the pumping power and proportionally the area of the pump spot and laser radiation, while maintaining the same intensity of the outgoing beam. In this case, the key parameters of the thin disk laser remain the same, because they are the excitation intensity function.

The power scalability of lasers with the above-mentioned thin disk active elements has some limitations. An effective TEM00 mode generation is possible, if the total wave front distortion is less than λ/4. This requirement is very difficult to meet, when there is a large mode diameter (lets say, more than a few millimeters, when a 1 µm wavelength is being generated). In addition, the characteristic feature of the thin disk geometry - a large difference between longitudinal and transverse gain. Under certain circumstances, the transverse gain may be so high, that the amplified spontaneous emission (ASE) in that direction negatively affects laser radiation properties. The main advantage of a thin disk geometry is that the disc diameter (or more accurately the diameter of the excitation spot) is much larger than the thickness of the disk. The larger this ratio, the better the performance of the system, in terms of the thermal management. On the other hand, the larger this ratio, the larger gets the undesirable transverse gain.

A laser system is known in the prior art, with a multiple disk active element, comprising an upper and lower cooling rods laid up in parallel, on the inner side of which a number of active media thin disks are set, which are symmetrically arranged alternately on the respective the said upper and lower rods, and each rod equipped with a number of pumping light emitting diodes, which are located in front of the respective disks of the active media in such a way that each of the active media disks has an pumping light emitting diode located in front of it on the other rod. The laser system is designed in such a way that the generated laser beams fall into the disks at a certain angle and create a combined generated zigzag shaped laser beam (see U.S. Patent 6 987 789).

In this laser system, each individual disk is excited from the front with the help of the individual excitation sources. The disadvantage of such system is a complex structure, because each disk must have a separate excitation laser diode installed. In order to ensure an efficient light absorption of the laser diode, the thin disk must be thick enough (several hundred of micrometers or even millimeters), which adversely affects the heat removal and respectively distortion of the beam due to thermal / mechanical stresses. In addition, this system is difficult to implement technically.

The closest in terms of the technical use is a solid state laser, comprising a solid state multiple disk active element, in which the active medium disks are set alternately on the two parallel planes, set in front of each other, each of the said disks on the outer surface has a high reflectivity mirror and is thermally coupled with the cooling element , besides there are means for generating pumping beam, which falls from the end of the active element at an angle on to the inner surface of the said side disk and further propagates along the optical element following a zigzag shaped trajectory, optically couples one after the other all said disks, by exciting the active medium of the disks thus inducing the generation of laser radiation and, in the inner area between the said planes, forming a single zigzag shaped generated laser radiation beam, which is collinear and aligned in space with the excitation light beam. The resonator of this laser has additional focusing optics, mounted on each arm of the laser radiation propagation, between the two nearest opposite disks, or when pumping light, that falls from the top down to the active disk, is intentionally concentrated by the mirror mounted at the top, which has a concave surface; the active disks are made having different active ions concentration or different thickness, in order to achieve an effective absorption of the pumping beam (see U.S. patent 6,873,633 B2).

The main disadvantage of the known active element with the multiple disks is its complex structure and manufacturing technology, because it requires additional focusing optics and the active disks have to be manufactured with different concentration or different thickness in order to achieve an effective excitation radiation absorption. Moreover, such an embodiment with many over-focusing elements takes considerable space, and is very sensitive to the alignment accuracy.

The aim of the invention is to simplify the design of laser multiple disk active element and its manufacturing technology, to improve its resistance to mechanical stress, facilitate alignment and also increase the output radiation power of the solid state lasers, which use the proposed multiple disk active element.

The essence of this invention is that in the longitudinally pumped multiple disk active element, aimed to generate laser radiation and/or to amplify it, comprising at least two active laser medium plates set out in parallel against each other, on the outer surface having a high reflectivity layer and thermally coupled with the cooling means; the means for generating pumping beam, which through the beam forming optics falls from the end of the active element at an angle on to one of the inner surfaces of the said plates and by further propagating through the inner cavity between the said plates along the optical element in a zigzag shaped trajectory, on the plates forms the excited disks, arranged alternately on the said plates, and optically couples them one after the other, thus inducing generation of laser radiation and, in the inner area between the said planes, forming a single zigzag shaped laser beam, which is collinear and aligned in space with the pumping beam, the means for generating the pumping beam is designed and set out in such a way, that at least one pumping beam, falling at an angle on to the said plate's inner surface and reflected from it in a zigzag trajectory, would pass through the active element's area between the said parallel plates at least twice, one time in a direct way, and another time - in an opposite direction, while the thickness (h) of the excited disk is significantly lower than its diameter (d), and the thickness of the disk is chosen to satisfy the condition, that during at least two passes of the pumping beam through the active element the total absorption coefficient in the active element should be around 90%.

In case the thickness (h) of the excited disk is much smaller than the diameter (d), the pumping beam is efficiently converted to laser radiation beam, and when the pumping beam passes the active element at least twice (once - in a direct way, another time - in the opposite direction), its total absorption coefficient in the active element is about 90%.

The exited disks, form in active laser medium plates by proposed invention, have the same thickness and the same active ions concentration, thus simplifying the manufacturing technology of active element, the design is simple and compact. The application of proposed multiple disk active element in solid-state lasers increases the power of their output (generated) radiation.

The thickness of the formed excited disks coincides with the one of the plate, where it is formed and its thickness is less than 100 µm.

Small thickness of the plate allows efficiently removing the heat from the excitation area and minimizes thermal gradients, while at the same time, minimizes the arising of related mechanical stresses. Smaller stresses allow increasing the power of the generated beam without the risk of degrading the active medium.

Such plate thickness is entirely sufficient to be efficiently cooled and to achieve an effective pump radiation excitation, because said excitation would be distributed throughout the entire volume of the each plate, i.e. the volume of the said plates would be efficiently exploited.

Further aspect of the present invention is that each excited disk can be formed on a separate laser's active medium plate and the plates, on which the said disks are formed, are alternately arranged on the opposing holders, which perform cooling function, and attached to them by proper means, for example, through optical contact, diffusion fitting, soldering or otherwise by using, for example, adhesives, soldering metal, heat-conductive intermediate and other heat-conductive materials.

Such a way of bonding the active medium plates to the cooling material ensures an efficient heat removal.

Further, the incidence angle of the pumping beam, when propagating in the active element according a zigzag trajectory, with surface of the each said plate is close to Brewster angle.

Having polarized pumping and generated beams, when their incidence angle is close to Brewster angle, the losses get reduced due to the reflections from the uncoated surfaces with the antireflection coatings.

Furthermore the area of the formed excited disk is smaller than the area of the said plate, on which the corresponding disk is formed.

This allows on a single manufactured (i.e. manufactured during a single technological process) optical element (i.e. on a thin plate) by pumping to excite a lot of thin disks with identical characteristics. This thereby highlights the technological workability of the product.

Moreover, successively excited disks located in different parallel rows are arranged in such a way that the disks would not overlap over each other in the direction perpendicular to the disk surface.

Further, the reflective layer on the outer surface of each plate is a multilayer dielectric mirror, which physics does not allow to reflect the generated wavelength of the light, incident upon the mirror at the zero angle.

Further, the said plate of an active laser medium is wedge-shaped.

The above-mentioned features allows avoiding the unwanted parasitic laser radiation, which may arise inside of the multiple disk active element.

Furthermore, the adjacent said active laser medium disks, located in the same row, are optically decoupled by the means of the attenuation of the amplified spontaneous emission (ASE) in the transverse direction of the active element, for example, by ASE absorbers.

This allows avoiding the adverse influence of effects related to the unwanted transverse gain on the characteristics of laser radiation.

Another aspect of the present invention is that said excited disks can be formed in the composite monolithic structure of two active laser medium plates, which are set out respectively on the basis of the opposite parallel sides, and attached to them with the help of an optical coupling, where the basis is of an optical material that is transparent, transmitting the pumping and generated laser beams, while the pumping beam, when propagating in a zigzag path along the said basis, forms the said excited disks on the said active laser medium plates.

The monolithic structure has the following advantages: a total internal reflection can be used for the pumping and the generated beams instead of evaporating dielectric mirrors; if the active layer thickness of 50 µm or less is enough in order to absorb about 90% of the pumping, then the technical embodiment of the monolithic structure is simpler than in the case of individual active medium plates; attaching such element to the cooling plates is simpler.

The basis of the monolithic structure can be selected from such materials (crystals) as GdVO4, YAG, YVO4 or YLF and so on, while the active laser medium plate can be selected from the same said materials doped with Nd or Yb ions, or other doped crystals, while the optical coupling between the base and the active laser medium plate can be obtained by means of the diffusion bonding, layer growth or by the means of deep optical contact.

Such coupling of doped layers and the transparent basis has virtually the same refraction index, which means that the optical reflection between the adjacent layers is avoided, the Fresnel reflection losses are reduced for both pumping and generation radiations irrespectively of their polarization states, this simplifying the management of the pumping and generated radiation polarizations. In the case when anisotropic laser crystals are used, for example, YVO, there is no need to adjust the directions of the pumping beam polarization for minimum losses and the pumping beam polarization for the maximum absorption.

Further, in the said active laser medium plates, the formed excited disks, in the transverse direction of the active element in the monolithic structure, are separated by grooves, which are intended to suppress the amplified spontaneous emission (ASE).

This allows avoiding the adverse influence of effects related to the unwanted transverse gain on the characteristics of laser radiation.

Furthermore, the high reflectivity surface is the surface of total internal reflection while the cooling plates are set out on the total internal reflection sides of the monolithic structure.

As mentioned above, use of the total internal reflection allows eliminating two dielectric mirrors, which are intended for reflecting the pumping and generated beams at the grazing operating angle, at the same time reflecting the generated beam at the minimum reducing the unwanted reflection of the generated beam in a direction perpendicular to the surface. This simplifies the manufacturing of the multiple disk active elements.

The active component can be pumped by the polarized light beams, falling from the opposite ends of the active element.

In the case of the non-monolithic structure, this helps to reduce losses appeared due to reflections and, when having an anisotropic crystal, for example, YVO, to adjust the polarization state of the pumping beam to achieve the maximum absorption.

The active element can be pumped by the unpolarized light beam, falling from one end of the active element, which, after passing the element, is reflected back at the other end of the active element, the polarization of the returning beam is altered in order to ensure efficient absorption of the returning beam in the active element.

This configuration is especially convenient when ensuring even excitation of the active element, when the crystal of the active element is anisotropic, for example, YVO. One polarization component of the unpolarized light gets absorbed much harder than other polarization components during the first passage. The remaining polarization component is not absorbed because of its another polarization state which is changed into orthogonal during two passes through the quarter wave plate and gets absorbed as if the source of the light is independent during the second passage. Thus a steady excitation of all the individual thin disks is ensured.

Moreover, the active element can be excited by the pumping beam, falling from one end of the active element or from both ends, which in space are formed in such a way that the caustic diameter of the pumping beam at the beginning of the active element would differ insignificantly, say by less than 10% from the beam diameter at the caustic waist, which is set in the middle of the path inside of the active element.

The invention is explained in more detail with the help of figures, where
Fig.1 - is a schematic drawing showing a multiple disk longitudinally pumped active element with the separate laser medium plates and inside the active element propagating overlapped pumping and generated laser radiation beams.
Fig.2 - is a schematic view of the active laser medium plate with the incident and reflected pumping beam's path.
Fig.3 - is a partial view of a longitudinal cross section of the active laser medium plate in the active element according to Fig. 1.
Fig.4 - is a laser resonator scheme with a longitudinally pumped multiple disk active element according to Fig. 1, with four passes of the pumping beam, when the laser medium is isotropic and the pumping beam is polarized.
Fig.5 - is a laser resonator scheme with a longitudinally pumped multiple disk active element according to Fig. 1, with two passes of the pumping beam, when the laser medium is isotropic and the pumping beam is randomly polarized (unpolarized) or the laser medium is anisotropic, and the pumping beam is polarized.
Fig.6 - is a laser resonator scheme with a longitudinally pumped multiple disk active element with two-sided pumping, where the laser medium is anisotropic, and the pumping beam is unpolarized (unpolarized).
Fig.7 - is a laser resonator scheme with a longitudinal longitudinally pumped multiple disk active element with two passes of the pumping beam, where the laser medium is anisotropic, and the pumping beam is polarized (unpolarized).
Fig.8 - the view of the pumping beam propagation inside the structure of the multiple disk active element according to Fig. 1.
Fig.9 - the structure of the multiple disk active element according to Fig.1 with the means for reducing the amplified spontaneous emission (ASE).
Fig. 10 -Longitudinally pumped composite monolithic structure (LPCMS) of multiple disc active element.
Fig.11 - is a schematic view of the multiple disk longitudinally pumped composite monolithic structure (LPCMS)} according to Fig. 10, coupled with cooling plates and, inside of it, propagating aligned pumping and generated laser radiation beams.
Fig. 12 - is a partial longitudinal cross section of longitudinally pumped composite monolithic structure (LPCMS)} according to Fig. 10.
Fig. 13 - is a diagram of a laser with LPCMS structure according to Fig. 10.
Fig. 14 -LPCMS structure according to Fig. 10, with damping of the amplified spontaneous emission (ASE).

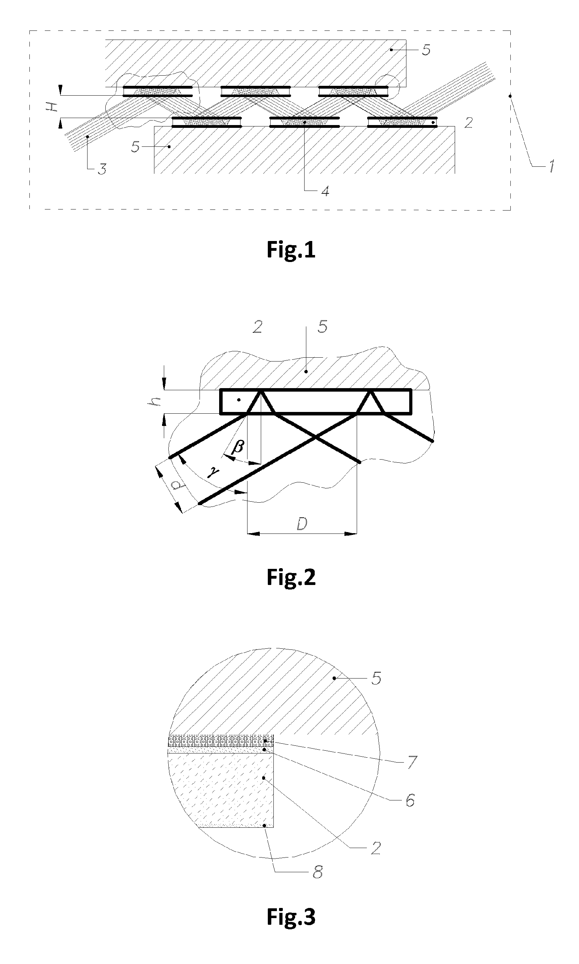

Fig. 1 shows a longitudinally pumped multiple disk active element 1 with separate active laser medium plates 2, laid out alternately on two parallel rows located at a distance (H) from each other. The pumping beam 3, with the diameter (d), falls from the end of the active element 1 at an angle (γ) (Fig.2) onto the outer plate 2 and by further propagating through the inner cavity between the rows of the said plates 2 along the active element 1 following a zigzag trajectory, on the plate 2 forms active (amplification) zones, i.e. excited disks 4 and optically couples them one by one, by causing the generation of laser radiation and, within the inner area between the said plates 2, forming a single generated laser beam of a zigzag shape, which is collinear and is overlapped in space with the pumping beam 3 The plates 2 are respectively attached alternately on two parallel holders 5 set out opposite each other, which perform the cooling function. On the outer surface of the active medium plate 2 is a high-reflectivity layer, for example, the high reflection dielectric mirror (6), reflecting well the wavelength of the pumping and generated beam, and which is attached to the holder 5 optionally, for example, by optical contact, diffusion bonding, welding, soldering or by other appropriate way, by using heat conductive intermediate layer 7 (Fig. 3), for example, adhesives, soldering metal or other heat-conductive materials. If the bonding is made without a glue, this layer is not required. The inner plane of the active laser medium plate 2 can be coated with a antireflection coating 8, for the pumping and generated laser beams.

The thickness (h) of the plate 2 coincides with the thickness of the excited disk 4, and is significantly smaller than the diameter (D) of the excited disk 4. The disc thickness is not larger than 100 µm.

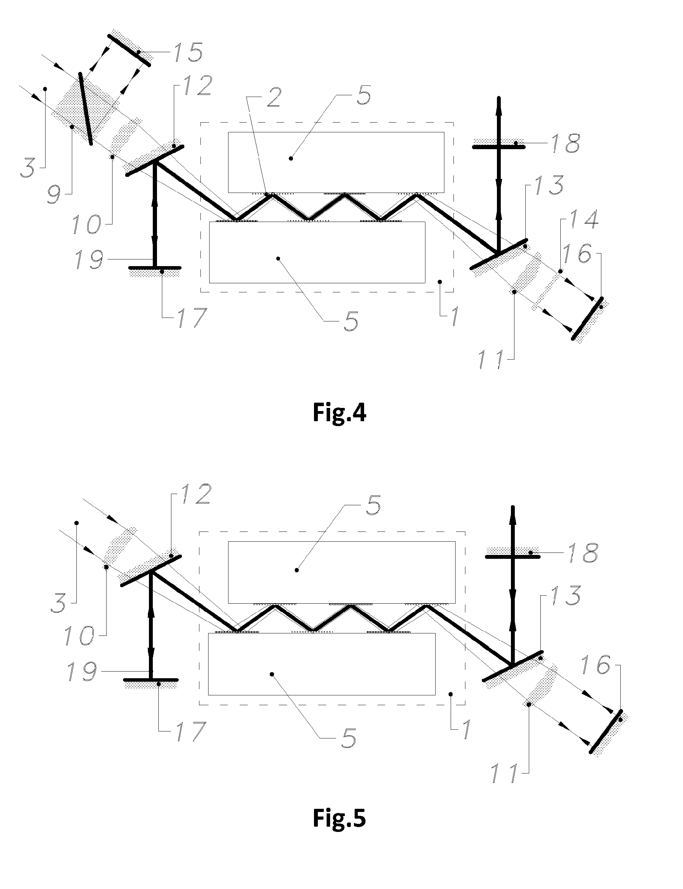

Fig. 4 shows a four passes longitudinally pumped active multiple disk element 1, where the active laser medium is isotropic. The means for forming the pumping beam comprises the polarizer 9, the pumping beam forming optics (10, 11), dichroic mirrors (12, 13), with a high reflection coefficient for the wavelength of the generated laser radiation, and high transmission coefficient for the wavelength of the pumping beam, λ/4 plate 14 and rear-mirrors for reflecting the wavelength of the pumping beam (15, 16). The multiple disk element (1) is used in the laser resonator, which is coupled by two end mirrors (17, 18), between which the laser radiation beam 19 is being formed

Fig.5 shows the four- passes longitudinally pumped active multiple disk element 1, when the active laser medium is isotropic and the pumping beam 3 is randomly polarized (unpolarized) or the active laser medium is anisotropic and the pumping beam is polarized and its polarization is aligned with the maximum absorption of the active element. In this case, the means for forming the pumping beam comprises the said beam forming optics (10, 11), dichroic mirrors (12, 13), with a high reflection coefficient for the generated laser wavelength and high transmission coefficient for the pumping wavelength and the rear mirror 16. Multiple disk element 1 placed in the resonator, which is coupled by end mirrors (17, 18) between which the laser radiation beam 19 is being formed.

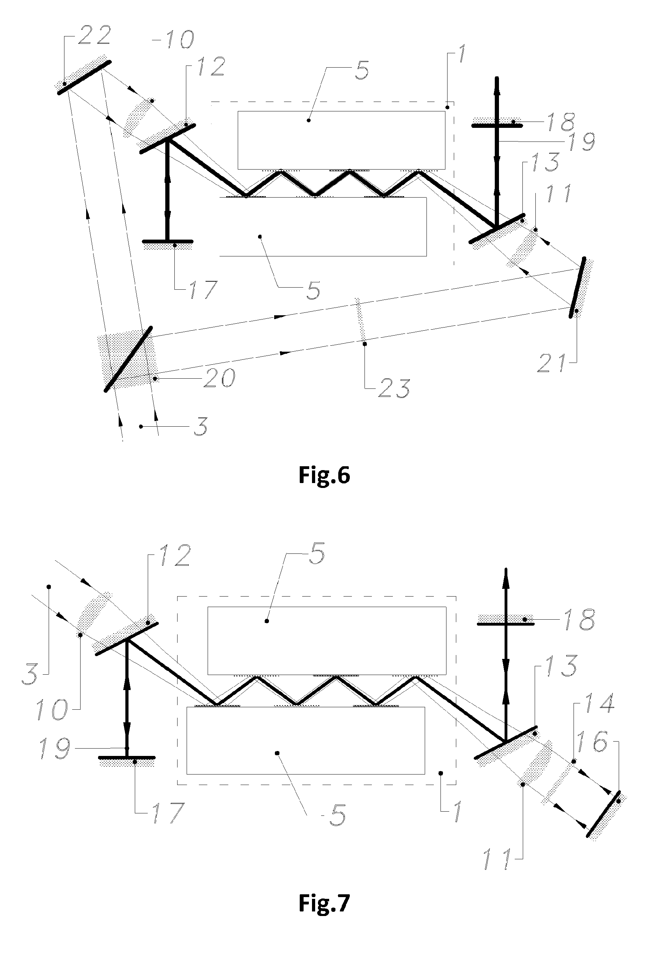

Fig.6 shows the active multiple disk element 1 which is pumped by two pumping beams, which fall into the active element 1 from its two opposite ends. The pumping beam 3, by using a polarizer 20, is divided into two pumping beams, which by the mirrors 21, 22 are directed into the opposite ends of the active element 1, respectively through the optics (10, 11), which forms the pumping beam, dichroic mirrors (12, 13). One of the pumping beams is directed into the mirror 21 through the polarization rotating λ/2 phase plate 23.

Fig.7 shows a resonator with an active multiple disk element 1 with a double-pass pumping, comprising the pumping beam forming optics (10, 11), dichroic mirrors (12, 13), with a high reflection coefficient for the generated laser radiation wavelength and high transmission coefficient for the pumping wavelength, λ/4 plate 14 for the pumping beam and the rear mirror 16. The resonator of multiple disk element 1 is coupled by the end mirrors (17, 18), between which the laser radiation beam 19 is being formed.

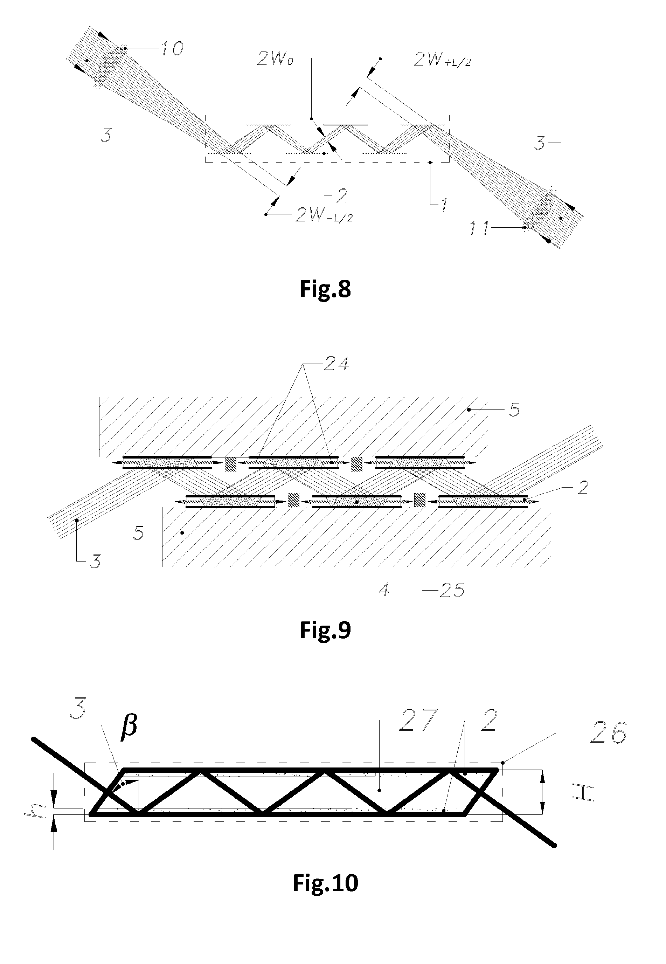

Fig. 8 shows the propagation of the pumping beam in the active multiple disk element 1, when pumping beams aligned in the space are falling into both ends of the element. 2W0 - the caustic waist diametr of the pumping beam, which is in the center according to the length of the element 1 between the first and the last side plates 2. 2W-L/2 - is the caustic diameter of the pumping beam on the first side plate, while 2W+L/2 - is the caustic diameter of the pumping beam on the last side plate. When the caustic waist is in the center, then the diameters 2W-L/2 and 2W+L/2 are equal. In order to ensure as steady as possible excitation of each individual disks 2W-L/2 and 2W+L/2 diameters must differ from the caustic waist diameter by not more than 10%.

Fig. 9 shows the multiple disk active element, where active disks are formed on separate plates 2, between which in each row on the holders 5 that perform the cooling function, set out across the active element are the absorbers (25) of the amplified spontaneous emission (ASE) (24), which appears across from each excited disk (4). The pumping and the generated beams are aligned in space with respect to each other.

Fig. 10 shows a longitudinally pumped multiple disk active element (1), which is manufactured as a composite monolithic structure with longitudinal pumping (LPCMS) 26. The monolithic structure 26 has a shape of a parallelepiped, i.e. the longitudinal cross-section of the monolithic structure has a shape of a parallelogram. The said monolithic structure 26 is composed of two active laser medium layers (plates) 2, which are arranged respectively on the opposite long sides of the base 27 of a transparent material that takes a shape of a parallelogram, and is attached to them with the help of optical coupling. The base 27 is made from optical material, which is transparent for the pumping and generated laser beams, and the pumping beam 3, passing in a zigzag path along the said transparent material base 27, forms the excited disks 4 in the said active laser medium layers 2. The monolithic structure 27 is selected from such materials (crystals) as GdVO4 , YAG, YVO4 or YLF and so on, and the active laser medium plate 2 can be selected from the same materials doped with Nd or Yb ions, or other doped crystals. Optical coupling between the base 27 and the active laser medium layer 2 can be obtained by the diffusion bonding or by the means of growth or deposition, or deep optical contact. The pump and the generated laser beams are aligned with each other in space. The thickness of the monolithic composite structure is H, while the thickness of the doped layer (the active laser medium) is h. The pump and the generated laser beams fall onto the inner reflective surface of the monolithic composite structure at an angle β.

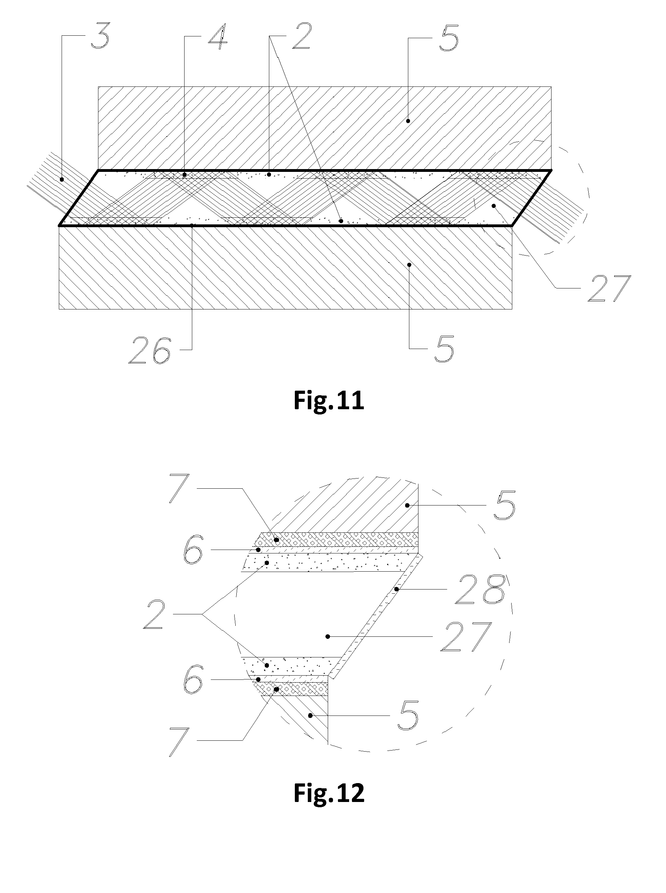

Fig.11 and Fig. 12 show longitudinally pumped multiple disk active element 1, manufactured as an composite monolithic structure LPCMS 26 with longitudinal pumping, which comprises a transparent base 27, with doped (active laser medium) layers 2 attached to it, which are coated with protective layers 6 from outside, thanks to the total internal reflection, it reflects both the pump and the generated wavelength light beams. The protective layers 6 are attached to the cooling plates 5 through the heat conductive intermediate layer 7, for example, glue, soldering metal. The ends of the monolithic structure, comprising the base 27 and the ends of the active laser medium layer 2 are covered by a antireflection layer 28 for the pump and generated beams. The pump and the generated beams are aligned in space with respect to each other. The pump beam 3, in the said layers 2, forms excited discs 4 (active, amplifying areas).

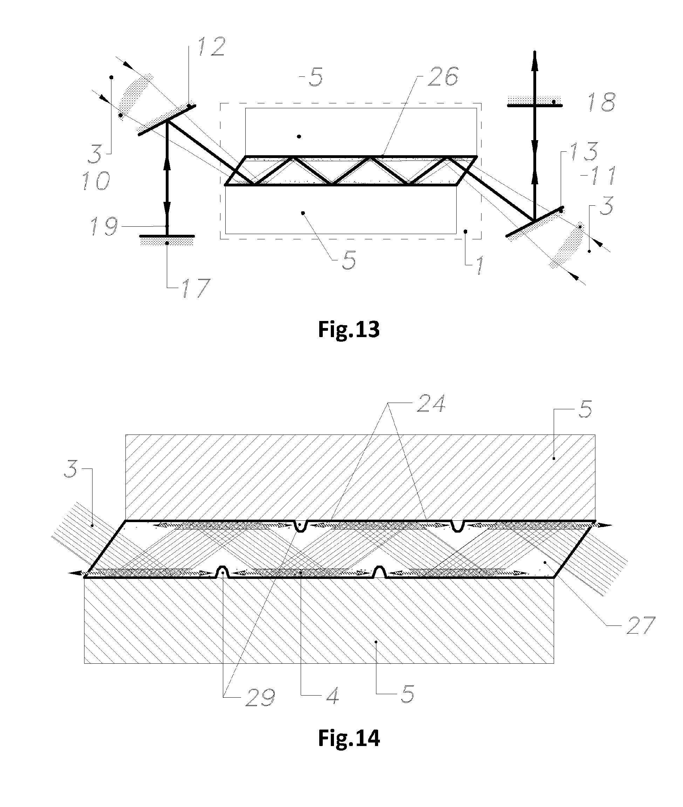

Fig. 13 shows an example scheme of a laser resonator with LPCMS active element, which comprises an active element with LPCMS structure 26, where the pumping is performed by pumping beams 3 at both ends (useful in cases, when the active laser medium layer 2 is anisotropic medium, for example non-doped GdVO4 and neodymium-doped GdVO4, while the pump beam is randomly polarized (unpolarized), for example, two polarized pump beams arise from a single unpolarized source, as shown in Fig.6). Fig.14 shows the LPCMS structure with grooves 29, which isolate the amplified spontaneous emission 24, which propagates from individual disks 4 (adjacent active zones).

The proposed longitudinally pumped multiple disk active element (1) Fig.1 operates in this way. The pumping beam 3 falls at an angle γ (Fig.2) into the outer active medium plate 2 and is partially absorbed there. The remaining unabsorbed part of the pumping beam is reflected form the outer surface of the active laser medium plate 2, on which there is a dielectric mirror 6 with high reflectivity coefficient. Since the pumping beam has the width *d,* therefore when it falls at an angle γ into the active medium plate 2, with the thickness *h*, it forms an elliptical excitation area - the disk with a diameter equal to *D* (Fig. 2). Depending on the refractive index of the active medium plate, the pumping beam refracts with an angle β and after being reflected further propagates into the active medium plate 2, which is situated in front, and there it excites another active disk. In this way, reflected from each plate the pumping beam optically couples all the plates 2, thereby acquiring a zigzag shape. After the excitation of the active plates 2 the generated laser radiation also travels in a zigzag path and in space it coincides with the pumping beam. In order to reduce the reflection losses from the active element 1 surface, the outer surfaces of the active medium plates 2 are coated with a translucent antireflection layer 8 (Fig. 3). During the pumping and generation processes, in order to remove the resulting heat, cooling holders (5) are used, to which the plates 2 are attached through the heat conductive intermediate layer 7 (Fig. 3). The intermediate layer can be adhesive, soldering metal and other, such that ensure good mechanical and thermal contact.

Further there are few options, on how multiple disk active element can be used in lasers.

The laser resonator scheme, shown in Fig.4, which comprises a multiple disk active element 1 with the active medium plates 2, which are made of isotopic material, and the four passes of the pumping beam through the active element 1 are used to efficiently absorb it. In such a resonator, the active medium plates 2 of the isotropic material, are pumped by a polarized pumping beam. Linearly polarized pumping beam 3 passes through the polarizer 9, then it is collimated by the lens 10, in order to achieve the required diameter of the pumping beam on the active medium plates 2. Optically formed and polarized pumping beam propagates through the resonator mirror 12, which is antireflected for the pumping beam, but also fully reflects the generated laser radiation 19. The polarized pumping beam travels in a zigzag optical path along the multiple disk active element 1, optically coupling all active medium plates 2, and is partially absorbed by the active material plates 2 in the volume of the multiple disk active element 1. After passing through the active element 1, the remaining part of the pumping beam passes through another resonator mirror 13, which is antireflected for the pumping beam wavelength, but fully reflects the generated laser radiation 19. After passing the mirror 13, the pumping beam 3 is collimated by the lens 11. Further the pumping beam falls into the quarter-wave (λ/4) phase plate 14, which converts the polarization into a circular. The mirror 16, placed behind the phase plate 14, fully reflects the pumping beam back, which once again passes through the λ/4 plate 14, which once again converts the pumping beam polarization, and thus the polarization of the returning pumping beam gets rotated by 90 angle. The pumping beam with such polarization, when passing through the multiple disk active element 1 for the second time, is again partially absorbed. The remaining part of the pumping beam is reflected by the polarizer 9 and is directed into the mirror 15. Reflected from the mirror 15, the pumping beam passes the active element 1 for the third time, and while passing the quarter-wave plate 14 two second times (forward and backward) and reflected from the mirror 16, once again converts the direction of polarization, and on its way back passes again through the active element 1 for the fourth time. This ensures the maximum absorption of the pumping beam in the volume of isotropic material plates 2. The generated laser radiation 19 is amplified inside the resonator, which is formed by the total reflection mirror 17, the mirrors (12, 13) and partially reflecting mirror 18, through which the laser radiation 19 is directed out from the resonator.

Fig.5 shows another pumping option of the optical resonator with a multiple disk active element 1, which may contain the active medium plates 2 made from isotropic material that undergo excitation {is pumped} by unpolarized radiation and active medium plates 2 made from anisotropic material that is pumped by polarized radiation. In this version, two passes of the pump radiation through the active medium are realized. The pumping beam 3, falling at an angle into the multiple disk active element 1 is collimated by the lens 10, in order to achieve the required pumping beam diameter on the active medium plates 2. Optically formed pumping beam 3 propagates through one of the resonator mirrors 12, which is antireflected for the pumping beam, but fully reflects the generated laser radiation 19. The pumping beam propagates in a zigzag optical path along the multiple disk active element 1, optically coupled all the active laser medium plates 2, and is partially absorbed by the active plate materials 2 inside the multiple disk active element 1. After the first pass through the multiple disk active element 1, the remaining part of the pumping beam passes through the mirror 13, which is antireflected for this beam, but which fully reflects the generated laser radiation 19. After passing the mirror 13, the pumping beam 3 is collimated by the lens 11. After reflection from the mirror 16, the pumping beam is directing back into the multiple disk active element 1 for the second pass. The laser radiation 19 is amplified inside the resonator, which is formed by the total reflection mirror 17, the mirrors (12, 13) and partially reflecting mirror 18, through which the laser radiation 19 is directed out from the resonator.

Fig.6 shows the resonator of the multiple disk active element 1, with the active medium plates 2 made from anisotropic material, which are pumped by the randomly polarized (unpolarized) beam 3, which falls into the active element 1 from its opposite ends. Randomly polarized (unpolarized) beam 3 is split by polarizer 20 into two polarized beams, which are directed by the mirrors 21 and 22 into the active element 1 from the opposite ends. The pumping beam 3 is collimated by lenses. In order to increase the absorption of the pumping beam 3 inside the active element, the polarization of one of the pumping beams is converted, by using the half-wavelength λ/2 phase plate for the pumping beam 23. The pumping beams pass through the active element 1 once. The laser radiation 19 is amplified inside the resonator, which is formed by the total reflection mirror 17, the mirrors (12, 13) and partially reflecting mirror (18), through which the laser radiation 19 is directed out from the resonator.

Fig.7 shows an optical resonator with the multiple disk active element 1, which has active medium plates 2 made from anisotropic material, which are pumped by randomly polarized (unpolarized) beam during the two passes of the pumping beam. The pumping beam 3, falling at an angle into the multiple disk active element 1, at first is collimated by the lens 10, in order to achieve the required pumping beam diameter on the active medium plates 2. Optically formed pumping beam 3 propagates through one of the resonator mirrors 12, which is antireflected for the pumping beam, but fully reflects the generated laser radiation 19. The pumping beam propagates in a zigzag optical path along the multiple disk active element 1, optically coupling all the active laser medium plates, and is partially absorbed by the active medium plates 2 inside the multiple disk active element 1. After the first pass, the remaining part of the pumping beam passes through the mirror 13, which is antireflected for this beam, but which fully reflects the generated laser radiation 19. After passing, the pumping beam 3 is collimated by the lens 11. Further the pumping beam falls into the quarter-wave (λ/4) phase plate 14, which converts the polarization into a circular. The mirror 16 reflects the pumping beam back once again through the λ/4 plate 14, which once again converts its polarization, and thus the polarization of the returning pumping beam gets turned by 90 angle. The pumping beam with such polarization, when passing through the multiple disk active element 1 for the second time, is absorbed. The laser radiation 19 is amplified inside the resonator, which is formed by the total reflection mirrors (17, 12, 13) and partially reflecting mirror 18, through which the laser radiation 19 is directed out from the resonator.

Fig.8 shows the scheme of the active element 1 with the geometric parameters of the pumping beam 3 or the distribution of the pumping beam 3 inside the multiple disk active element 1. The pumping beam 3, collimated by the lenses 10 and 11, falls at an angle from both ends of the multiple disk active element 1 and travels along inside through the active element 1 in a zigzag trajectory, optically coupling all the active medium plates 2. The generated laser radiation propagates following the optical path. The pumping and the generated laser radiation beams are aligned in space.

Fig.9 shows the damping of the cross-amplified spontaneous emission (ASE) inside the multiple disk active element. When the pumping beam 3 propagates through the multiple disk active element 1 and the active disks 4 are excited on the active media plates 2, the laser radiation, which is aligned with the pumping beam in space, is generated, but at the same time the spontaneous emission 24, which propagates across the active medium plates 2, gets also amplified. Amplified spontaneous emission 24 is not a desirable phenomenon, therefore in this multiple disk active element structure 1, it is damped between the active material plates by inserting the absorbers for the amplified spontaneous emission 25, which prevents it from spreading towards the adjacent active material plates 2, thereby preventing its continuous amplification.

Fig. 10 shows another realization of the monolithic multiple disk active element, where the multiple disk active element 1 is manufactured as a composite monolithic structure 26 with longitudinal excitation (LPCMS -system). The pumping beam 3 falls from the rear at an angle β into the thin active laser medium layer 2 of the said structure 26, and further gets reflected from the internal surfaces of the structure passes in a zigzag path along the transparent material base 27, by forming the excited disks 4 in the layers 2, and at the same time generates laser radiation, which is aligned with the pumping beam in space.

The operating principle of the resonator, shown in Fig. 13, is analogous to the one described in Fig.7, only instead of the multiple disk active element with individual alternately arranged active medium plates, described in Fig.1,a monolithic multiple disk active element structure is used, which is described in Fig. 10.

Fig.14 shows the damping of a cross-amplified spontaneous emission inside the monolithic multiple disk active element structure. As in the case described in Fig.9, there are also ASE absorbers used in order to stop the propagation of ASE along the active layer, instead of those there can also be grooves (29) in the active layer.

## Claims

1. Longitudinally pumped multiple disk active element with its pumping scheme for the generation of laser radiation and/or its amplification, comprising at least two arranged against each other in parallel active laser medium plates (2), on the outer surface having high reflectivity layer and thermally coupled with the cooling device; the means for generating pumping beam (3), which through the beam forming optics falls from the end of the active element (1) at an angle on to one of the internal surfaces of the said plates, and further propagating through the internal cavity between the said plates along the optical element (1) in a zigzag shaped trajectory, on the plates forms excited disks (4), arranged alternately on the said plates, and optically couples them one by one, thus inducing generation of the laser radiation and, in the internal area between the said plates, forming the single zigzag shaped laser beam, which is collinear and aligned in space with the pumping beam (3) , **characterised in that** the means for generating the pumping beam (3) is designed and set out in such a way, that at least one pumping beam, falling at an angle onto the said plate's inner surface (2) and reflected from it, would pass the active element's (1) area between the said parallel plates in a zigzag trajectory at least twice, one time in a direct way, and another time - in an opposite direction, while the thickness (h) of the excited disk (4) is significantly smaller than its diameter (d), and the thickness of the disk is chosen to satisfy the condition, that during at least two passes of the pumping beam through the active element the total absorption coefficient in the active element should be around 90%.

2. Active element according to claim 1, **characterised in that** the thickness (d) of the formed excited disks (4) coincides with plate's (2) thickness, where it is formed, and its thickness is not more than 100 µm.

3. Active element according to any of claims 1-2, **characterised in that** each excited disk (4) is formed in a separate laser active medium plate (2), and the plates (2), on which these discs are formed, are alternately arranged on the opposing holders (5), which perform the cooling function, and attached to them selectively through optical contact, diffusion fitting, soldering or otherwise by using, for example, adhesives, soldering metal, heat-conductive intermediate and other heat-removing materials.

4. Active element according to any of claims 1-3, **characterised in that** the incident angle of the pumping beam, propagating in a zigzag path in active element to surface of the each said plates is close to Brewster angle.

5. Active element according to any of claims 1-4, **characterised in that** the area of the formed excited disk is smaller than the area of the said plate, on which the respective disk is formed.

6. Active element according to any of claims 1-5, **characterised in that** the successive excited disks (4) located on different parallel rows are arranged in such a way that the disks (4) would not overlap over each other in the direction perpendicular to the disk surface.

7. Active element according to any of claims 1-6, **characterised in that** the reflective layer (6) on the outer surface of each plate is a multilayer dielectric mirror, which does not reflect the generated wavelength of the laser radiation, incident upon the mirror at a zero angle.

8. Active element according to any of claims 1-7, **characterised in that** the said active laser medium plate is wedge-shaped.

9. Active element according to any of claims 1-8, **characterised in that** the adjacent said active laser medium disks, located in the same row, in the transverse direction of the active element are optically separated by the means of attenuation of the amplified spontaneous emission (ASE), for example, by ASE absorbers (25).

10. Active element according to any of claims 1-2, **characterised in that** the said excited disks (4) are formed in the composite monolithic structure (26) of two active laser medium plates (2), which are set out respectively on the basis (27) of the opposite parallel sides, and attached to them by the optical coupling, where the basis is of an optical material that is transparent, transmitting the pumping and generated laser beams, while the pumping beam, when propagating in a zigzag path along the said basis, forms the said excited disks on the said active laser medium plates.

11. Active element according to claim 10, **characterised in that** the base of the monolithic structure is selected from such materials (crystals) as GdVO₄, YAG, YVO₄ or YLF and similar, while the active laser medium plate can be selected from the same materials doped with Nd or Yb ions, or otherwise doped crystals, while the optical coupling between the basis and the active laser medium plate can be obtained by means of the diffusion bonding or layer growth or by the means of deep optical contact.

12. Active element according to claims 10-11, **characterised in that** in the said active laser medium plates the formed excited disks (4), in the transverse direction of the active element (1) in the monolithic structure, are separated by grooves (29), which are intended to supress the amplified spontaneous emission (ASE).

13. Active element according to any of claims 1-2, 10-12, **characterized in that** the high-reflectivity layer is a surface of total internal reflection, while the cooling plates (5) are set out on the total internal reflection sides of the monolithic structure.

14. Method of pumping of active element as claimed in any of claims 1-2, 10-13, **characterized in that** the active element is pumped by the polarized light beams, falling from the opposite ends of the active element.

15. Method of pumping of active element as claimed in any of claims 1-2, 10-13, **characterized in that** the active element is pumped by the unpolarized radiation beam, falling from one end of the active element, which is reflected back at the other end of the active element, the polarization of the returning beam is altered in order to ensure an efficient absorption of the returning beam in the active element.

16. Method of pumping of active element as claimed in any of claims 1-2, 10-13, **characterized in that** the active element is pumped by the pumping beam, falling from one end of the active element or from both ends, which in space are formed in such a way that the caustic diameter of the pumping beam at the beginning of the active element would differ by less than 10% from the beam diameter at the caustic waist, which is set in the middle of the optical path inside of the active element.

## Amended claims

### Amended claims in accordance with Rule 137(2) EPC.

**1.** Longitudinal pumping method of an active element for generation of laser radiation and/or its amplification, comprising at least two active laser medium plates, arranged in two parallel planes facing each other, wherein at least one laser diode pumping beam impinges upon any end of said active element and passes it at least twice, the first time in a direct way from one end to opposite end of the active element, and the second time propagates oppositely to said direct way, and each time propagates between said active laser medium plates along the active element in a zigzag shaped trajectory and alternately reflects from said active laser medium plates, forming excited disks at places of reflection, generating laser radiation, and optically couples the excited disks one by one, forming a single zigzag shaped laser beam, which is collinear and aligned in space with the laser diode pumping beam or beams, **characterized in that** the laser diode pumping beam or beams, impinging upon one end, and the laser diode pumping beam or beams, impinging upon opposite end of said active element, are aligned between each other in space and each of which is formed in such a way, that a diameter at the first place of reflection and a diameter at the last place of reflection of each pumping beam when it propagates from the any end of said active element, differ by less than 10 per cent from the diameter 2W₀ of each pumping beam in its waist, which is on the beams' optical path along the distance L between said first and said last places of reflection.

**2.** Longitudinal pumping method according to claim 1, **characterized in that** the waist of said each laser diode pumping beam is in the centre along the distance L between the first and the last places of reflection.

**3.** Longitudinal pumping method according to claim 1 or 2, **characterized in that** thicknesses of the active laser medium plates are less than 100 micrometers.
